# EUROPEAN PATENT SPECIFICATION

(11) **EP 1 662 369 B1**
(45) Date of publication and mention of the grant of the patent: **06.12.2017**
(21) Application number: 05253250.4
(22) Date of filing: 26.05.2005
(51) Int. Cl.: G06F 3/06, G06F 12/0866, G06F 11/20

(54) **Data storage system and data storage control device**
Datenspeichersystem und Datenspeichersteuervorrichtung
Système de stockage de données et appareil de commande pour une mémoire de données

(30) Priority: 30.11.2004 JP 2004347411; 28.01.2005 JP 2005022121
(43) Date of publication of application: 31.05.2006
(60) Divisional application: 10190560.2
(73) Proprietor: FUJITSU LIMITED, Kawasaki-shi, Kanagawa 211-8588 (JP)
(72) Inventor: Ohara, Shigeyoshi c/o Fujitsu Limited, Kawasaki-shi, Kanagawa 211-8588 (JP); Masuyama, Kazunori c/o Pfu Limited, Ishikawa, 929-1192 (JP)
(74) Representative: Stebbing, Timothy Charles

(56) References cited:
- EP-A- 1 132 805
- EP-A- 1 353 264
- US-A1- 2003 110 330
- US-A1- 2004 024 962
- INTERNATIONAL BUSINESS MACHINES CORPORATION: "Visual assistance for optimum cabling", RESEARCH DISCLOSURE, MASON PUBLICATIONS, HAMPSHIRE, GB, vol. 453, no. 120, 1 January 2002 (2002-01-01), XP007129657, ISSN: 0374-4353

## Description

The present invention relates to a configuration of a data storage system and a data storage control device which are used for an external storage device of a computer, and more particularly to a data storage system and a data storage control device having a combination and connection of units which can construct a data storage system connecting many disk devices with high performance and flexibility.

Recently as various data is computerized and handled on computers, a data storage device (external storage device) which can efficiently store large volumes of data with high reliability for processing, independently from a host computer which executes the processing of the data, is increasingly more important.

For this data storage device, a disk array device having many disk devices (e.g. magnetic disks and optical disks) and a disk controller for controlling these many disk devices are used. This disk array device can receive disk access requests simultaneously from a plurality of host computers and control many disks.

Recently a disk array device which can control a disk device group with several thousand or more disk devices, that is with several hundred terabytes or more by itself, is available.

Such a disk array device contains a memory, which plays the part of a cache of a disk. By this the data access time when a read request or write request is received from the host computer can be decreased, and higher performance can be implemented.

Generally a disk array device is comprised of a plurality of major units, that is, a channel adapter which is a connection section with the host computer, a disk adapter which is a connection section with the disk drive, a cache memory, a cache control unit which is in charge of the cache memory, and many disk drives.

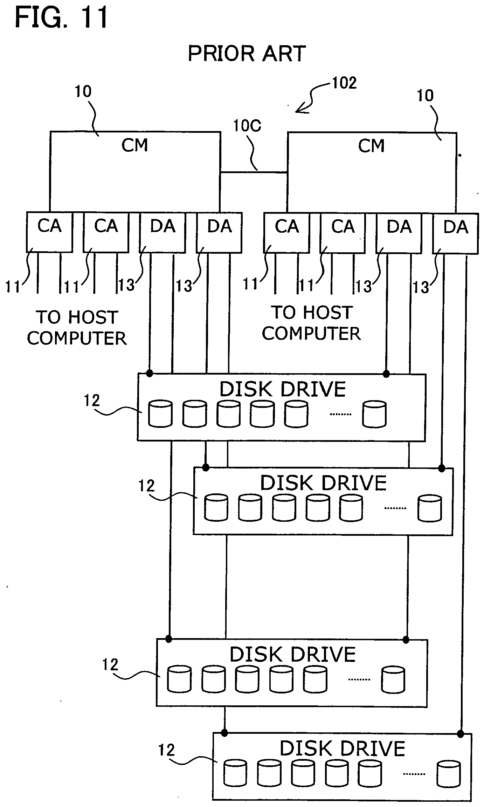

Fig. 11 is a diagram of a first prior proposal. The disk array device 102 shown in Fig. 11 has two cache managers (cache memory and cache control unit) 10, and the channel adapter 11 and the disk adapter 13 are connected to each cache manager 10.

The two cache managers 10 are directly connected via a bus 10c so that communication is possible. The two cache managers 10 and 10, the cache manager 10 and the channel adapter 11, and the cache manager 10 and the disk adapter 13 are connected via a PCI bus respectively since low latency is required.

The channel adapter 11 is connected to the host computer (not illustrated) by Fibre Channel or Ethernet®, for example, and the disk adapter 13 is connected to each disk drive of the disk enclosure 12 by a cable of the Fibre Channel, for example.

The disk enclosure 12 has two ports (e.g. Fibre Channel ports), and these two ports are connected to different disk adapters 13. This provides redundancy, which increases resistance against failure.

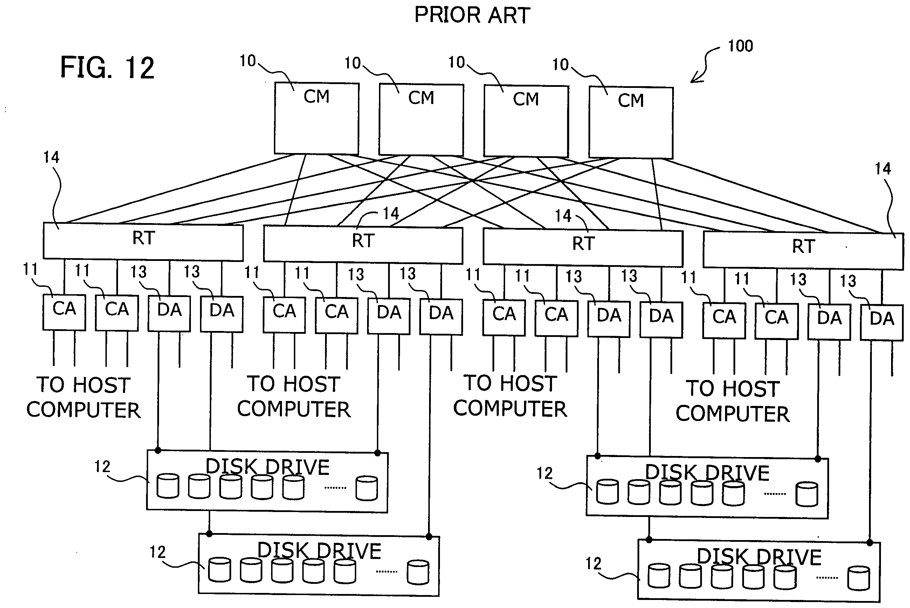

Fig. 12 is a block diagram depicting a disk array device 100 of a second prior proposal. As Fig. 12 shows, the proposed disk array device 100 has cache managers (denoted as CM in figures) 10 which is comprised of a cache memory which and a cache control unit as a major unit, channel adapters (denoted as CA in figures) 11 which are interfaces with a host computer (not illustrated), disk enclosures 12each comprised of a plurality of disk drives, and disk adapters (denoted as DA in figures) 13 which are interfaces with this disk device 12.

The disk array device further has routers (denoted as RT in figures) 14 for inter-connecting the cache managers 10, channel adapters 11, and disk adapters 13 for performing data transfer and communication between these major units.

This disk array device 100 comprises four cache managers 10 and four routers 14 which correspond to these cache managers 10. These cache managers 10 and routers 14 are inter-connected one-to-one, therefore connection between a plurality of cache managers 10 is redundant, and accessibility improves (e.g. Japanese Patent Application Laid-Open No. 2001-256003).

In other words, even if one router 14 fails, the connection between a plurality of cache managers 10 is secured by way of another router 14, and even in this case, the disk array device 100 can continue normal operation.

In this disk array device 100, two channel adapters 11 and two disk adapters 13 are connected to each router 14, and the disk array device 100 comprises a total of eight channel adapters 11 and a total of eight disk adapters 13.

These channel adapters 11 and disk adapters 13 can communicate with all the cache managers 10 by the interconnection of the cache managers 10 and routers 14.

The channel adapter 11 is connected to a host computer (not illustrated), which processes data, by Fibre Channel or Ethernet®, and the disk adapter 13 is connected to the disk enclosure 12 (specifically the disk drive) by a cable of Fibre Channel, for example.

And not only user data from the host computer but also various information to maintain the consistency of internal operations of the disk array device 100 (e.g. mirroring processing of data among a plurality of cache memories) between the channel adapter 11 and the cache manager 10 and between the disk adapter 13 and the cache manager 10 is exchanged.

The cache manager 10, channel adapter 11 and disk adapter 13 are connected with the router 14 via an interface that can implement a lower latency (faster response speed) than the communication between the disk array device 100 and host computer, or the disk array device 100 and disk drive. For example, the cache manager 10, channel adapter 11 and disk adapter 13 are connected with the router 14 by a bus designed to connect an LSI (Large Scale Integration) and a printed circuit board, such as a PCI (Peripheral Component Inter-connect) bus.

The disk enclosure 12 for housing disk drives has two Fibre Channel ports that are connected to a disk adapter 13 belonging to a different router 14 respectively. By this the disconnection of the connection from the cache manager 10 can be prevented even when a failure occurs in the disk adapter 13 or router 14.

Because of recent advancements of computerization, data storage systems with larger capacities and faster speeds are demanded. In the case of the above mentioned disk array device of the first proposal, if the cache managers 10, channel adapters 11 and disk adapters 13 are extended to increase capacity and speed, the number of ports of the disk enclosure 12 must be increased and the number of connection cables between the disk adapters 13 and the disk enclosure 12 must be increased.

Increasing the number of ports of the disk enclosure 12 increases the number of cables according to the number of disk adapters to be connected to one disk enclosure, which increases mounting space. This means that the size of the device increases. Increasing the number of ports is also a poor idea since a sufficient redundant structure can be implemented for one disk enclosure only if there are two systems of paths. Also the number of disk adapters to be connected is not constant, but changes according to user demands, so if many ports are extended, waste is generated if a small number of disk adapters are used, but if few ports are extended, these cannot support many disk adapters. In other words flexibility is lost.

In the case of the disk array device of the second proposal, on the other hand, extending the cache managers 10, channel adapters 11 and disk adapters 13 is possible, but all communication is through the routers 14, so communication data concentrates in the routers 14, which becomes a throughput bottleneck, therefore high throughput cannot be expected. Also in the case of the disk array device 100, the number of connection lines between the cache managers 10 and routers 14 sharply increases if a large scale disk array device having many major units is constructed, and this makes the connection relationship complicated and mounting becomes physically difficult.

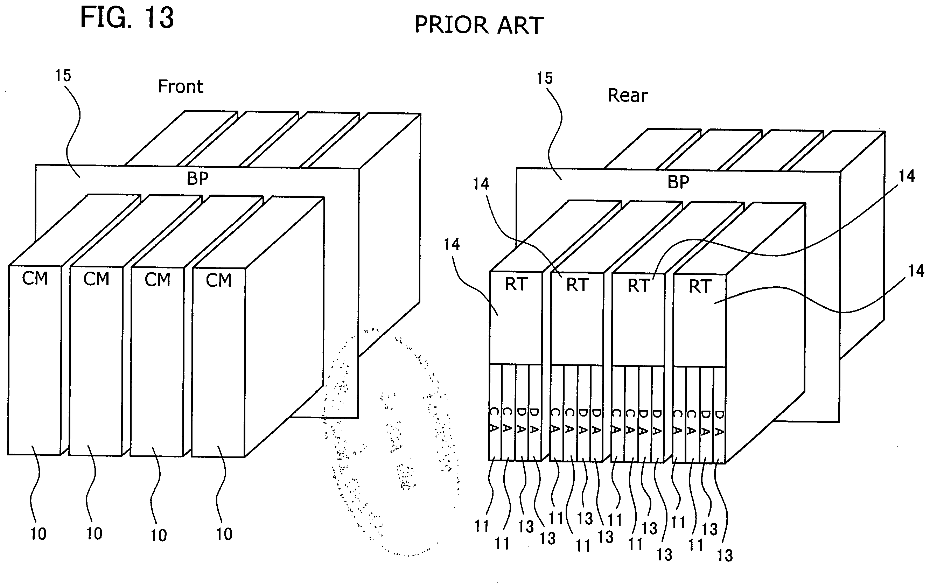

For example, in the case of the configuration shown in Fig. 12, four (four plates of) cache managers 10 and four routers 14 are connected via the back panel 15, as shown in Fig. 13. In this case, the number of signals is (4X4X (number of signal lines per path)), as shown in Fig. 12. For example if one path is connected by a 64-bit PCI (parallel path), the number of signal lines on the back panel 15 is 100x16=1600 including the control lines. To wire these signal lines, the printed circuit board on the back panel 15 requires six signal layers.

In the case of a large scale configuration, such as a configuration where eight (four plates of) cache managers 10 and eight (four plates of) routers 14 are connected via the back panel 15, the required number of signal lines is about 100x8x8=6400. Therefore the printed circuit board of the back panel 15 requires 24 layers, which is four times the above case, of which implementation is difficult.

If four lanes of a PCI-Express bus, which has less signals lines than a 64-bit PCI bus, are used for connection, the number of signal lines is 16x8x8=1024. However where the PCI bus runs at 66MHz, the PCI-Express bus is a 2.5Gbps high-speed bus, and in order to maintain the signal quality of a high-speed bus, expensive substrate material must be used.

If a low-speed bus is used, the wiring layer can be replaced by using vias, but in the case of a high-speed bus, vias should be avoided since this drops the signal quality. Therefore in the case of a high-speed bus, a layout is required such that all the signal lines do not cross, so about double the signal layers are required compared with a low-speed bus having the same number of signal lines. For example, a board requires 12 signal layers, and these must be constructed using expensive material, therefore this is also difficult to be implemented.

Also in the case of the disk array device 100 of the second proposal, if one of the routers 14 fails, the channel adapters 11 and disk adapters 13 connected to this router 14 also cannot be used thereafter when that router 14 fails.

With the foregoing in view, it is desirable to provide a data storage system and data storage control device for performing data transfer among each unit at high throughput, and easily implement a small scale to large scale configuration without causing mounting problems.

It is also desirable to provide a data storage system and data storage control device having the flexibility to easily implement a small scale to large scale configuration in a combination of same units, while maintaining redundancy which enables operation replaced by using vias, but in the case of a high-speed bus, vias should be avoided since this drops the signal quality. Therefore in the case of a high-speed bus, a layout is required such that all the signal lines do not cross, so about double the signal layers are required compared with a low-speed bus having the same number of signal lines. For example, a board requires 12 signal layers, and these must be constructed using expensive material, therefore this is also difficult to be implemented.

Also in the case of the disk array device 100 of the second proposal, if one of the routers 14 fails, the channel adapters 11 and disk adapters 13 connected to this router 14 also cannot be used thereafter when that router 14 fails.

US 2003/110330 discloses a storage control and switch unit for transferring data between a host computer and first, second, third and fourth storage media. A first storage controller has an operative serial ATA connection with each of the first and second storage media and an inoperative serial ATA connection to each of the third and fourth storage media. A second storage controller has an operative serial ATA connection with each of the third and fourth storage media and an inoperative serial ATA connection to each of the first and second storage media. First, second, third and fourth switches are logically interposed between the first, second, third and fourth storage media, respectively, and the first and second storage controllers select which serial ATA connection of each storage media is operative and which is inoperative.

With the foregoing in view, it is desirable to provide a data storage system and data storage control device for performing data transfer among each unit at high throughput, and easily implement a small scale to large scale configuration without causing mounting problems.

It is also desirable to provide a data storage system and data storage control device having the flexibility to easily implement a small scale to large scale configuration in a combination of same units, while maintaining redundancy which enables operation even if one unit fails.

It is further desirable provide a data storage system and data storage control device for easily implementing a small scale to large scale configuration without causing mounting problems while maintaining high throughput and redundancy.

A data storage control device for performing access control of a plurality of storage devices for storing data according to an access instruction from a host of the present invention comprises: a plurality of control modules comprising: a cache memory for storing a part of data stored in said storage devices; a cache control unit for controlling said cache memory; a first interface unit, connected to said cache control unit, for controlling the interface with said host; and a second interface unit, connected to said cache control unit, for controlling the interface with said plurality of storage devices, said data storage control device further comprising: a plurality of first switch units disposed between said plurality of control modules and said plurality of storage devices for selectively switching said second interface unit of each control module and said plurality of storage devices, and characterised by further comprising: a back panel for connecting each said second interface unit of said plurality of control modules to said plurality of first switch units by a serial bus; a plurality of control module boards, each having a corresponding control module mounted thereon, attached to a front side of said back panel; and a plurality of switch boards, each having a corresponding first switch unit mounted thereon, attached to a back side of said back panel, wherein said back panel further comprises a plurality of slots, in which are inserted said plurality of control module boards and said plurality of switch boards.

In the present invention, it is preferable that the cache control unit and the second interface unit are connected by a high-speed serial bus with low latency, and the second interface unit and the plurality of first switch units are connected by a serial bus using a back panel.

In the present invention, it is also preferable that the control module further has a communication unit for communicating with another one of the control modules, and further comprises a second switch unit for selectively connecting the communication unit of each of the control modules.

In the present invention, it is also preferable that the communication unit of each control module and the second switch unit are connected using a back panel.

In the present invention, it is also preferable that the first switch unit and the plurality of storage devices are connected by cables.

In the present invention, it is also preferable that the storage device further comprises a plurality of access ports, and the plurality of different first switch units are connected to the plurality of access ports.

In the present invention, it is also preferable that the cache control unit and the second interface unit are connected by a plurality of lanes of high-speed serial buses, and the second interface unit and the plurality of first switch units are connected by a serial bus using a back panel.

In the present invention, it is also preferable that the high-speed serial bus is a PCI-Express bus.

In the present invention, it is also preferable that the serial bus is a Fibre Channel bus.

In the present invention, it is also preferable that the cache control unit and the first interface unit are connected by a high-speed serial bus with low latency.

In the present invention, the second interface of each control module and the plurality of first switch units are connected, so all the control modules can maintain redundancy to access all the storage devices, and even if the number of control modules increases, the control modules and first switch units are connected by a serial bus, which has a small number of signals constituting the interface, using a back panel, so mounting on the printed circuit board is possible.

Reference is made, by way of example only, to the accompanying drawings in which:
Fig. 1 is a block diagram depicting a data storage system according to an embodiment of the present invention;
Fig. 2 is a block diagram depicting a control module in Fig. 1;
Fig. 3 is a block diagram depicting the back end routers and disk enclosures in Fig. 1 and Fig. 2;
Fig. 4 is a block diagram depicting the disk enclosures in Fig. 1 and Fig. 3;
Fig. 5 is a diagram depicting the read processing in the configurations in Fig. 1 and Fig. 2;
Fig. 6 is a diagram depicting the write processing in the configurations in Fig. 1 and Fig. 2;
Fig. 7 is a diagram depicting the mounting configuration of the control modules according to an embodiment of the present invention;
Fig. 8 is a diagram depicting a mounting configuration example of the data storage system according to an embodiment of the present invention;
Fig. 9 is a block diagram depicting a large scale storage system according to an embodiment of the present invention;
Fig. 10 is a block diagram depicting a medium scale storage system according to another embodiment of the present invention;
Fig. 11 is a block diagram depicting a storage system according to a first prior art;
Fig. 12 is a block diagram depicting a storage system according to a second prior art; and
Fig. 13 is a diagram depicting a mounting configuration of the storage system according to the second prior art in Fig. 12.

Embodiments of the present invention will now be described in the sequence of the data storage system, read/write processing, mounting structure and other embodiments.

### Data storage system

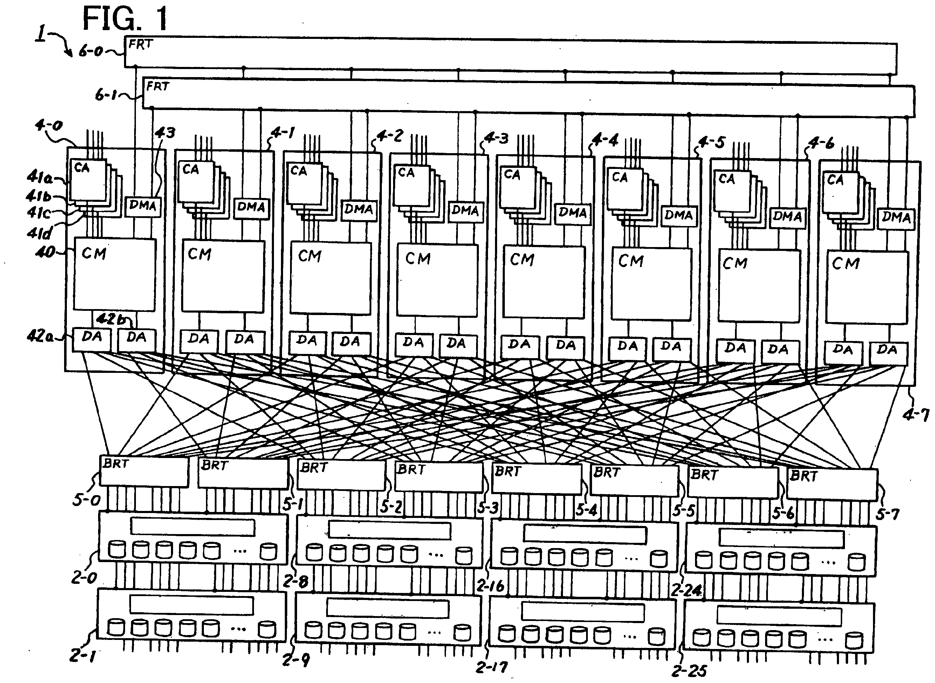

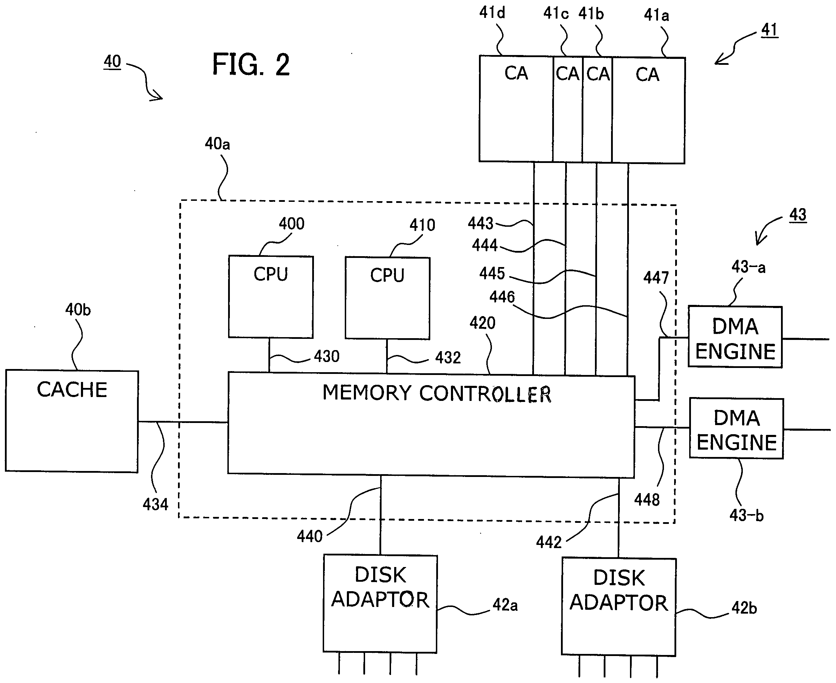

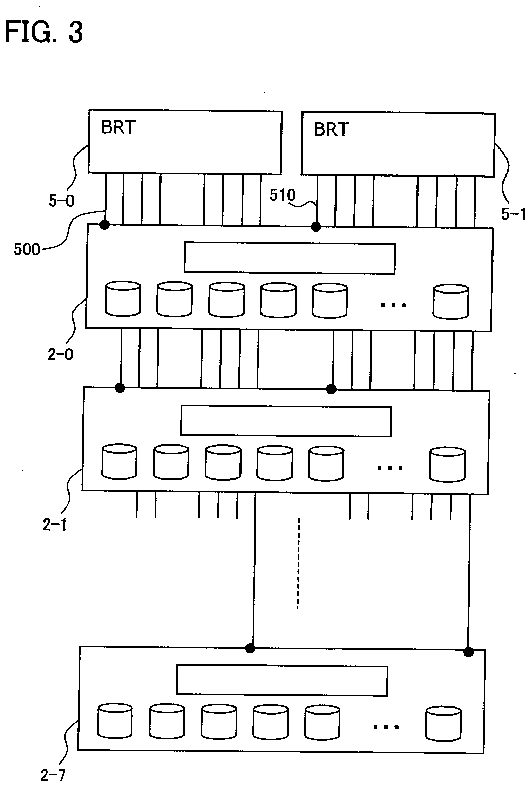

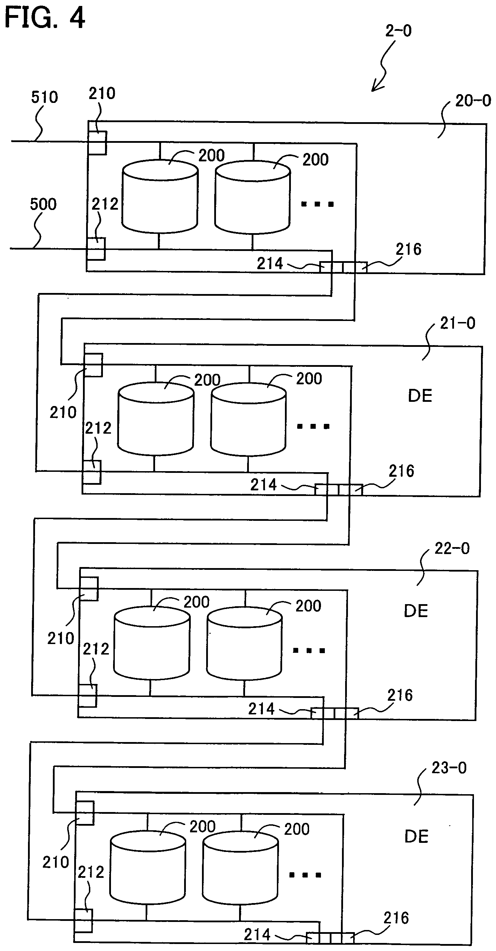

Fig. 1 is a block diagram depicting the data storage system according to an embodiment of the present invention, Fig. 2 is a block diagram depicting the control module in Fig. 1, Fig. 3 is a block diagram depicting the back end routers and disk enclosures in Fig. 1, and Fig. 4 is a block diagram depicting the disk enclosures in Fig. 1 and Fig. 3.

Fig. 1 shows a large scale storage system having eight control modules as an example. As Fig. 1 shows, the storage system 1 has a plurality of disk enclosures 2-0 - 2-25 for holding data, a plurality of (eight in this case) of control modules 4-0 - 4-7 disposed between the host computers (data processing units), which are not illustrated, and a plurality of disk enclosures 2-0 - 2-25, a plurality (eight in this case) of back end routers (first switch unit: denoted as BRT in figures, hereafter called BRT) 5-0 - 5-7 disposed between the plurality of control modules 4-0 - 4-7 and the plurality of disk enclosures 2-0 - 2-25, and a plurality (two in this case) of front end routers (second switch unit: denoted as FRT in figures, hereafter called FRT) 6-0 - 6-1.

Each of the control modules 4-0 - 4-7 has cache managers 40, channel adapters (first interface unit: denoted as CA in figures) 41a - 41d, disk adapters (second interface unit: denoted as DA in figures) 42a and 42b, and DMA (Direct Memory Access) engine (communication unit: denoted as DMA in figures) 43.

In Fig. 1, to simplify the drawing, reference symbols "40" of the cache managers, "41a", "41b", "41c" and "41d" of the channel adapters, "42a" and "42b" of the disk adapters, and "43" of the DMA are denoted only for the control module 4-0, and these reference symbols of the constituent elements of other control modules 4-1 - 4-7 are omitted.

The control modules 4-0 - 4-7 will be described with reference to Fig. 2. The cache manager 40 performs read/write processing based on the processing request (read request or write request) from the host computer, and has a cache memory 40b and cache control unit 40a.

The cache memory 40b holds a part of the data stored in a plurality of disks of the disk enclosures 2-0 - 2-25, that is, it plays a role of a cache for the plurality of disks. The cache control unit 40a controls the cache memory 40b, channel adapter 41, device adapter 42 and DMA 43. For this, the cache control unit 40a has one or more (two in Fig. 2) CPUs 400 and 410 and memory controller 420. The memory controller 420 controls the read/write of each memory and switches paths.

The memory controller 420, connected with the cache memory 40b via the memory bus 434, is connected with the CPUs 400 and 410 via the CPU buses 430 and 432, and is also connected to the disk adapters 42a and 42b via the later mentioned four lanes of the high-speed serial buses (e.g. PCI-Express) 440 and 442. In the same way, the memory controller 420 is connected to the channel adapters 41a, 41b, 41c and 41d via the four lanes of high-speed serial buses (e.g. PCI-Express) 443, 444, 445 and 446, and is connected to the DMAs 43-a and 43-b via the four lanes of the high-speed serial buses (e.g. PCI-Express) 447 and 448.

As described later, this high-speed bus, such as PCI-Express, communicates in packets, and by disposing a plurality of lanes of serial buses, communication at fast response speeds with little delay, that is at low latency, becomes possible even if the number of signal lines is decreased.

The channel adapters 41a - 41d are the interfaces for the host computers, and the channel adapters 41a - 41d are connected with different host computers respectively. The channel adapters 41a - 41d are preferably connected to the interface unit of the corresponding host computer respectively by a bus, such as Fibre Channel and Ethernet®, and in this case an optical fiber or coaxial cable is used for the bus.

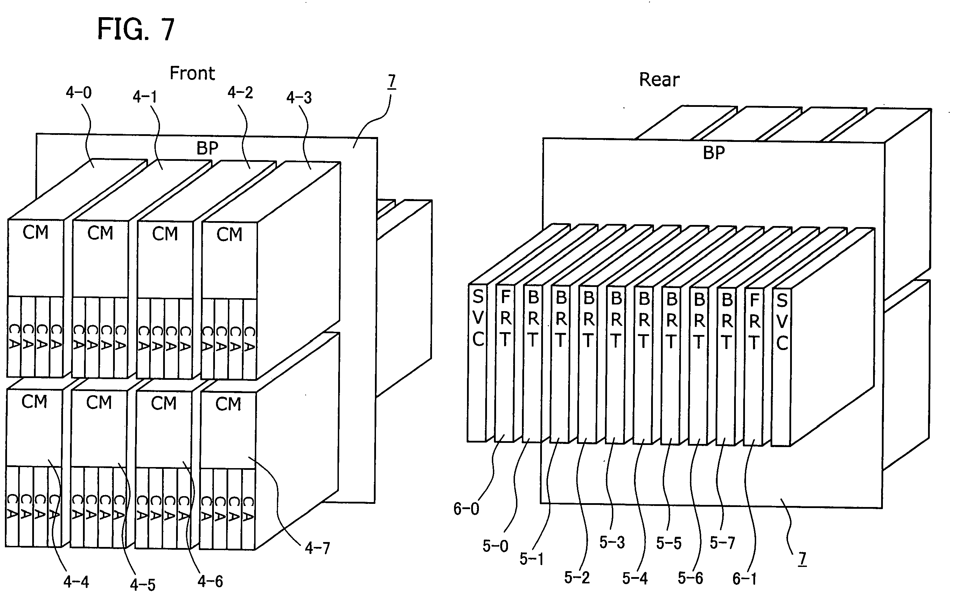

Each of these channel adapters 41a - 41d is constructed as a part of each control module 4-0 - 4-7, but must support a plurality of protocols as an interface unit between the corresponding host computer and control modules 4-0 - 4-7. Since the protocol to be supported will vary depending on the corresponding host computer, the cache manager 40, which is a major unit of the control modules 4-0 - 4-7, is mounted on a different printed circuit board, as described later in Fig. 7, so as to easily replace each channel adapter 41a - 41d when necessary.

Examples of a protocol with the host computers which the channel adapters 41a - 41d should support is iSCSI (Internet Small Computer System Interface) corresponding to the Fibre Channel and Ethernet® mentioned above. Each channel adapter 41a - 41d is directly connected with the cache manager 40 via a bus designed for connecting an LSI (Large Scale Integration) and printed circuit board, such as a PCI-Express bus, as mentioned above. By this, high throughput demanded between each channel adapter 41a - 41d and cache manager 40 can be implemented.

The disk adapters 42a and 42b are the interfaces of the disk enclosures 2-0 - 2-25 to the disk drives, and are connected to the BRTs 5-0 - 5-7 connected to the disk enclosures 2-0 - 2-25, for which four FC (Fibre Channel) ports are used. Each disk adapter 42a and 42b is directly connected with the cache manager 40 by a bus designed for connecting the LSI (Large Scale Integration) and printed circuit board, such as a PCI-Express bus, as mentioned above. By this, high throughout demanded between each disk adapter 42a and 42b and cache manager 40 can be implemented.

As Fig. 1 and Fig. 3 show, the BRTs 5-0 - 5-7 are multi-port switches which selectively switch and communicably connect the disk adapters 42a and 42b of each control module 4-0 - 4-7 and each disk enclosure 2-0 - 2-25.

As Fig. 3 shows, a plurality (two in this case) of BRTs 5-0 - 5-1 are connected to each disk enclosure 2-0 - 2-7. As Fig. 4 shows, each disk enclosure 2-0 has a plurality of disk drives 200 having two ports respectively, and this disk enclosure 2-0 further has the unit disk enclosures 20-0 - 23-0 having four connection ports 210, 212, 214 and 216. These are connected in series so as to implement an increase of capacity.

In the disk enclosures 20-0 - 23-0, each port of each disk drive 200 is connected to the two ports 210 and 212 via a pair of FC cables from the two ports 210 and 212. These two ports 210 and 212 are connected to different BRTs 5-0 and 5-1, as described in Fig. 3.

As Fig. 1 shows, the disk adapters 42a and 42b of each control module 4-0 - 4-7 are connected to all the disk enclosures 2-0 - 2-25 respectively. In other words, the disk adapter 42a of each control module 4-0 - 4-7 is connected to the BRT 5-0 connected to the disk enclosure 2-0 - 2-7 (see Fig. 3), the BRT 5-2 connected to the disk enclosures 2-8, 2-9, - -, the BRT 5-4 connected to the disk enclosures 2-16, 2-17, - -, and the BRT 5-6 connected to the disk enclosures 2-24, 2-25, - -, respectively.

In the same way, the disk adapter 42b of each control module 4-0 - 4-7 is connected to the BRT 5-1 connected to the disk enclosures 2-0 - 2-7 (see Fig. 3), the BRT 5-3 connected to the disk enclosures 2-8, 2-9, - - , the BRT 5-5 connected to the disk enclosures 2-16, 2-17, - - , and the BRT 5-7 connected to the disk enclosures 2-24, 2-25, - -, respectively.

In this way, a plurality (two in this case) of BRTs are connected to each disk enclosure 2-0 - 2-31, and different disk adapters 42a and 42b in a same control module 4-0 - 4-7 are connected to the two BRTs connected to the same disk enclosures 2-0 - 2-31 respectively.

By this configuration, each control module 4-0 - 4-7 can access all of the disk enclosures (disk drives) 2-0 - 2-31 via either disk adapter 42a or 42b.

Each of these disk adapters 42a and 42b, constructed as a part of the control modules 4-0 - 4-7, is mounted on the board of the cache manager 40, which is a major unit of the control modules 4-0 - 4-7, each disk adapter 42a and 42b is directly connected with the cache manager 40 by a PCI (Peripheral Component Inter-connect) - Express bus, for example, and by this, high throughput demanded between each disk adapter 42a and 42b and cache manager 40 can be implemented.

Also as Fig. 2 shows, each disk adapter 42a and 42b is connected to the corresponding BRTs 5-0 - 5-7 by a bus, such as Fibre Channel or Ethernet®. In this case, the bus is installed on the printed circuit board of the back panel by electric wiring, as described later.

The disk adapters 42a and 42b of each control module 4-0 - 4-7 and BRTs 5-0 - 5-7 are in a one-to-one mesh connection, so as to be connected to all the disk enclosures, as described above, so as the number of control modules 4-0 - 4-7 (in other words, the number of disk adapters 42a and 42b) increases, the number of connections increases and the connection relationship becomes more complicated, which makes physical mounting difficult. But when Fibre Channel, which has a small number of signals constituting the interface is small, is used for the connection between the disk adapters 42a and 42b and BRTs 5-0 - 5-7, mounting on the printed circuit board becomes possible.

When each disk adapter 42a and 42b and corresponding BRTs 5-0 - 5-7 are connected by Fibre Channel, the BRTs 5-0 - 5-7 become the switches of the Fibre Channel. Each BRT 5-0 - 5-7 and the corresponding disk enclosures 2-0 - 2-31 are also connected by Fibre Channel, for example, and in this case the optical cables 500 and 510 are used for connection since the modules are different. As Fig. 1 shows, the DMA engines 43 mutually communicate with other control modules 4-0 - 4-7, and are in-charge of communication and data transfer processing with other control modules 4-0 - 4-7. Each of the DMA engines 43 of each control module 4-0 - 4-7 is constructed as a part of the control modules 4-0 - 4-7, and is mounted on the board of the cache manager 40, which is a major unit of the control modules 4-0 - 4-7. And the DMA engine 43 is directly connected with the cache manager 40 by the above mentioned high-speed serial bus, and mutually communicates with the DMA engine 43 of other control modules 4-0 - 4-7 via the FRTs 6-0 and 6-1.

The FRTs 6-0 and 6-1 are connected to the DMA engine 43 of a plurality (particularly three or more, eight in this case) of control modules 4-0 - 4-7, and selectively switch and communicably connect these control modules 4-0 - 4-7.

By this configuration, each DMA engine 43 of each control module 4-0 - 4-7 executes communication and data transfer processing (e.g. mirroring processing), which is generated according to the access request from the host computer between the cache manager 40 connected to this control module and the cache manager 40 of other control modules 4-0 - 4-7 via the FRTs 6-0 and 6-1.

As Fig. 2 shows, the DMA engine 43 of each control module 4-0 - 4-7 is comprised of a plurality (two in this case) of the DMA engines 43-a and 43-b, and each of these two DMA engines 43-a and 43-b uses the two FRTs 6-0 and 6-1.

The DMA engines 43-a and 43-b are connected to the cache manager 40 by a PCI-Express bus, for example, as mentioned above, so as to implement low latency.

In the case of communication and data transfer processing among each control module 4-0 - 4-7 (in other words among the cache managers 40 of each control module 4-0 - 4-7), data transfer volume is high and it is preferable to decrease the time required for communication, and high throughput and low latency (fast response speed) are demanded. Therefore as Fig. 1 and Fig. 2 show, the DMA engine 43 of each control module 4-0 - 4-7 and the FRTs 6-0 and 6-1 are connected by a bus using high-speed serial transmission (PCI-Express or Rapid-IO), which is designed to satisfy both demands of high throughput and low latency.

PCI-Express and Rapid-IO use 2.5 Gbps high-speed serial transmission, and for the bus interface thereof, a small amplitude differential interface called LVDS (Low Voltage Differential Signaling) is used.

### Read/write processing

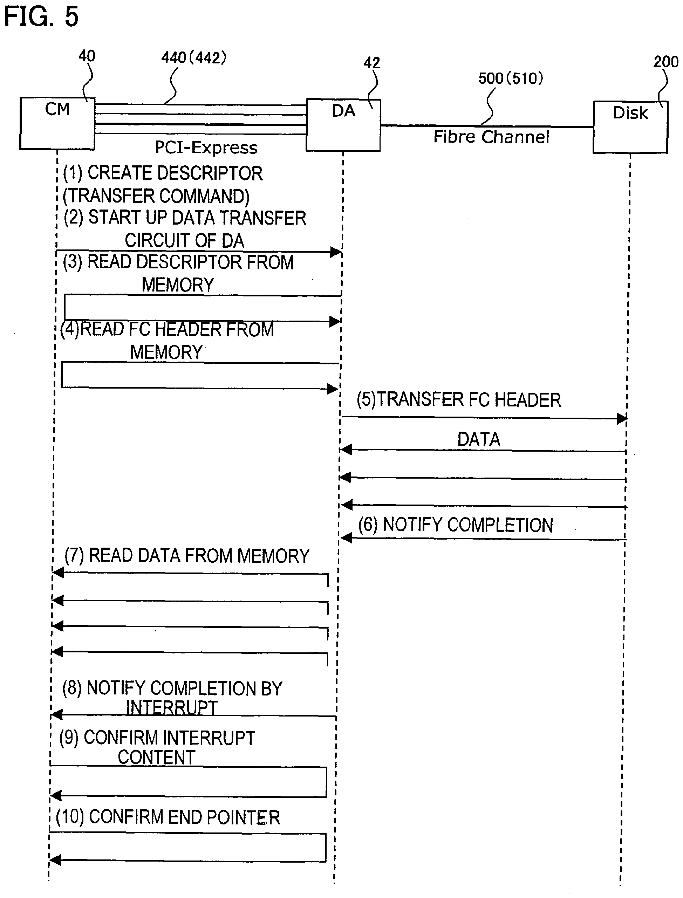

Now the read processing of the data storage system in Fig. 1 to Fig. 4 will be described. Fig. 5 is a diagram depicting the read operation of the configuration in Fig. 1 and Fig. 2.

When the cache manager 40 receives the read request from one host computer via a corresponding channel adapter 41a - 41d, and if the cache memory 40b holds the target data of this read request, the cache manager 40 sends this target data held in the cache memory 40b to the host computer via the channel adapters 41a - 41d.

If this data is not held in the cache memory 40b, the cache control unit 40a reads the target data from the disk drive 200 holding this data into the cache memory 40b, then sends the target data to the host computer which issued the read request.

This read processing with the disk drive will be described with reference to Fig. 5.
(1) The control unit 40a (CPU) of the cache manager 40 creates an FC header and descriptor in the descriptor area of the cache memory 40b. The descriptor is an instruction to request a data (DMA) transfer to the data transfer circuit (DMA circuit), and includes the address of the FC header on the cache memory, address of data to be transferred on the cache memory, number of data bytes thereof, and logical address of the disk of the data transfer.
(2) The data transfer circuit of the disk adapter 42 is started up.
(3) The started data transfer circuit of the disk adapter 42 reads the descriptor from the cache memory 40b.
(4) The start data transfer circuit of the disk adapter 42 reads the FC header from the cache memory 40b.
(5) The started data transfer circuit of the disk adapter 42 analyzes the descriptor and receives the data on the requested disk, first address and number of bytes, and transfers the FC header to the target disk drive 200 via the Fibre Channel 500 (510). The disk drive 200 reads the requested target data and sends it to the data transfer circuit of the disk adapter 42 via the Fibre Channel 500 (510).
(6) The disk drive 200 reads the requested target data and sends the completion notice to the data transfer circuit of the disk adapter 42 via the Fibre Channel 500 (510) when the transmission completes.
(7) When the completion notice is received, the started data transfer circuit of the disk adapter 42 reads the read data from the memory of the disk adapter 42 and stores it in the cache memory 40b.
(8) When the read transfer completes, the started data transfer circuit of the disk adapter 42 sends the completion notice to the cache manager 40 by an interrupt.
(9) When the interrupt factor from the disk adapter 42 is received, the control unit 42a of the cache manager 40 confirms the read transfer.
(10) The control unit 42a of the cache manager 40 checks the end pointer of the disk adapter 42, and confirms the read transfer completion.

All connections must have high throughput to achieve sufficient performance, and since in particular the signal exchange is frequent (seven times in Fig. 5) between the cache control unit 40a and the disk adapter 42, a bus with an especially low latency is required.

In this example, both PCI-Express (four lanes) and Fibre Channel (4G) are used as high throughput connections, but while the PCI-Express is a low latency connection, the Fibre Channel connection has a relatively high latency (data transfer takes time).

### In the second prior proposal above, Fibre Channel, whose

latency is high, cannot be used for RT 14 between CM 10 and DA 13 or CA 11 (see Fig. 12), but in the present invention, which has the configuration in Fig. 1, Fibre Channel can be used for BRTs 5-0 - 5-7.

To implement low latency, the number of signals of the bus cannot be decreased to less than a certain number, but according to the present invention, Fibre Channel which uses small number of signal lines can be used for the connection between the disk adapter 42 and the BRT 5-0, so this decreases the number of signal lines on the back panel, which is effective for mounting.

Now the write operation will be described. When a write request is received from one of the host computers via a corresponding channel adapter 41a - 41d, the channel adapter 41a - 41d which received the write request command and write data inquires the cache manager 40 for the address of the cache memory 40b to which the write data is supposed to be written.

When the response is received from the cache manager 40, the channel adapter 41a - 41d writes the write data in the cache memory 40b of the cache manager 40, and also writes the write data to the cache memory 40b in at least one cache manager 40 which is different from this cache manager 40 (in other words, a cache manager 40 in a different control module 4-0 - 4-7). For this, the channel adapter 41a - 41d starts up the DMA engine 43, and writes the write data in the cache memory 40b in a cache manager 40 in another control module 4-0 - 4-7 via the FRTs 6-0 and 6-1.

Write data is written to the cache memories 40b of at least two different control modules 4-0 - 4-7 here because data is duplicated (mirrored) so as to prevent loss of data even if an unexpected hardware failure occurs in the control modules 4-0 - 4-7 or cache manager 40.

When the writing of write data to these plurality of cache memories 40b ends normally, the channel adapters 41a-- 41d send the completion notice to the host computers 3-0 - 3-31, and processing ends.

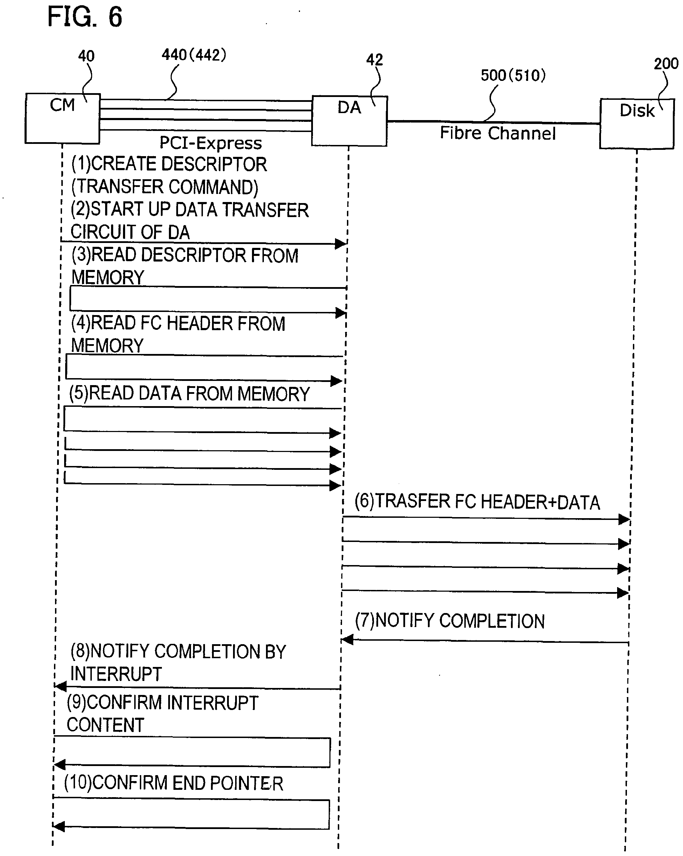

This write data must also be written back to the target disk drive (write back). The cache control unit 40a writes back the write data of the cache memory 40b to the disk drive 200 holding this target data according to the internal schedule. This write processing to the disk drive will be described with reference to Fig. 6.
(1) The control unit 40a (CPU) of the cache manager 40 creates the FC header and descriptor in the descriptor area of the cache memory 40b. The descriptor is an instruction to request a data transfer (DMA) to the data transfer (DMA) circuit, and includes the address of the FC header on the cache memory, address of the data to be transferred on the cache memory and number of data bytes thereof, and logical address of the disk of the data transfer.
(2) The data transfer circuit of the disk adapter 42 is started up.
(3) The started data transfer circuit of the disk adapter 42 reads the descriptor from the cache memory 40b.
(4) The started data transfer circuit of the disk adapter 42 reads the FC header from the cache memory 40b.
(5) The started data transfer circuit of the disk adapter 42 analyzes the descriptor and receives the data of the requested disk, first address and number of bytes, and reads the data from the cache memory 40b.
(6) After the reading completes, the data transfer circuit of the disk adapter 42 transfers the FC header and data to the target disk drive 200 via the Fibre Channel 500 (510). The disk drive 200 writes the transferred data to the internal disk.
(7) When the writing of data completes, the disk drive 200 sends the completion notice to the data transfer circuit of the disk adapter 42 via the Fibre Channel 500 (510).
(8) When the completion notice is received, the started data transfer circuit of the disk adapter 42 sends the completion notice to the cache manager 40 by an interrupt.
(9) When the interrupt factor from the disk adapter 42 is received, the control unit 42a of the cache manager 40 confirms the write operation.
(10) The control unit 42a of the cache manager 40 checks the end pointer of the disk adapter 42 and confirms the write operation completion.

In both Fig. 6 and Fig. 5, an arrow mark indicates the transfer of a packet, such as data, and a U-turn arrow mark indicates the reading of data where data is sent back to the data request side. Since a confirmation of the start and end status of the control circuit in DA is requested, the data is exchanged seven times between the CM 40 and DA 42 to transfer data once. The data is exchanged twice between the DA 42 and disk 200.

By this, it is understood that low latency is required for the connection between the cache control unit 40 and disk adapter 42, and on the other hand, an interface which has a small number of signal lines can be used for the disk adapter 42 and disk device 200.

### Mounting structure

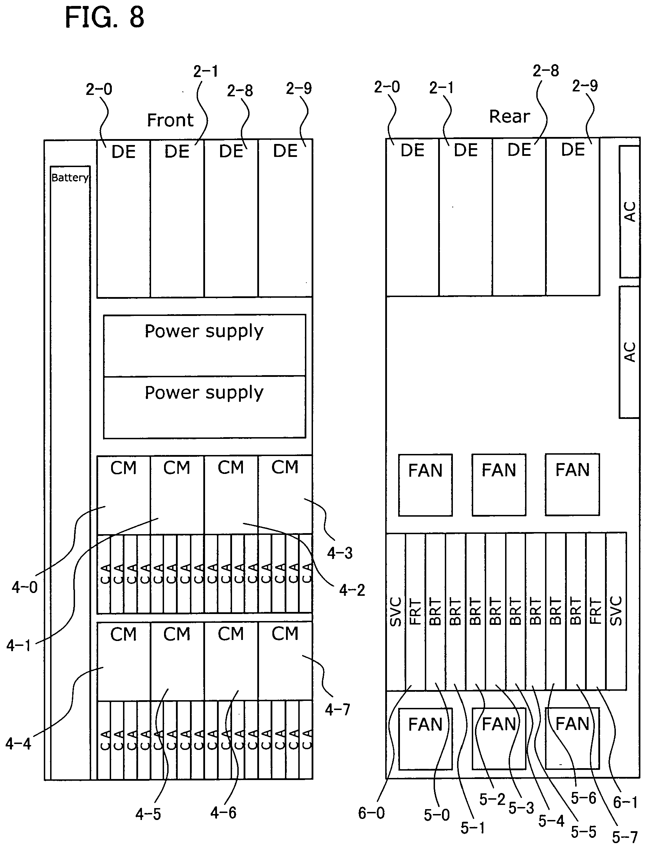

Fig. 7 is a diagram depicting a mounting configuration example of the control module according to the present invention, Fig. 8 is a diagram depicting a mounting configuration example including the control module and disk enclosure in Fig. 7, and Fig. 9 and Fig. 10 are block diagrams depicting the data storage system having these mounting configurations.

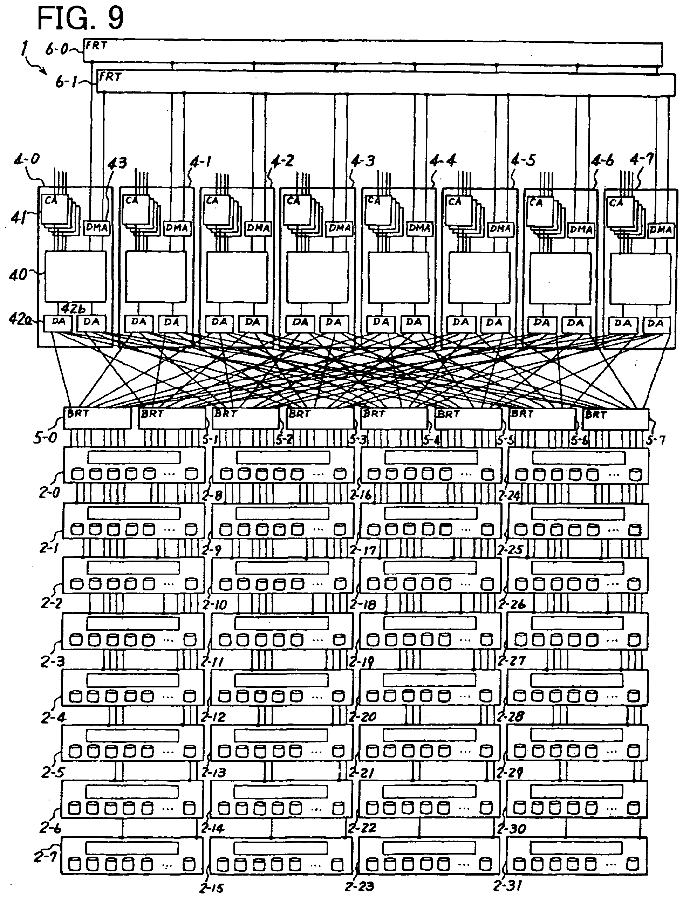

As Fig. 8 shows, four disk enclosures 2-0, 2-1, 2-8 and 2-9 are installed in the upper side of the body of the storage device. The control circuit is installed in the bottom half of the storage device. This bottom half is divided into the front and back parts by the back panel 7, as shown in Fig. 7. Slots are created on the front and the back of the back panel 7 respectively. In the case of the storage system with the large scale configuration in Fig. 9, eight (eight plates of) CMs 4-0 - 4-7 are disposed in the front side, and two (two plates of) FRTs 6-0 and 6-1, eight (eight plates of) BRTs 5-0 - 5-7, and the service processor SVC which is in-charge of power supply control (not illustrated in Fig. 1 and Fig. 9), are disposed in the back side.

In Fig. 7, the eight plates of CMs 4-0 - 4-7 and two plates of FRTs 6-0 and 6-1 are connected by four lanes of the PCI-Express via the back panel 7. The PCI-Express has four (differential and bi-directional) signal lines, so 16 signal lines are used for four lanes, which means that the number of signal lines is 16x16=256. The eight plates of CMs 4-0 - 4-7 and eight plates of BRTs 5-0 - 5-7 are connected by Fibre Channel via the back panel 7. The Fibre Channel, which has differential and bi-directional signal lines, has 1x2x2=4 signal lines, so the number of signal lines used is 8x8x4=256.

By using the bus differently depending on the connection location, as described above, eight plates of CMs 4-0 - 4-7, two plates of FRTs 6-0 and 6-1, and eight plates of BRTs 5-0 - 5-7 can be implemented by 512 signal lines, even in the case of a storage system with large scale configuration as shown in Fig. 9. This number of signal lines is the number of signals that can sufficiently mounted on the back panel substrate 7, and the number of signal layers of the board is six, which is sufficient, and is in a range where implementation ispractical in terms of cost.

In Fig. 8, four disk enclosures 2-0, 2-1, 2-8 and 2-9 (see Fig. 9) are installed, and the other disk enclosures 2-3 - 2-7 and 2-10 - 2-31 are installed in a different body.

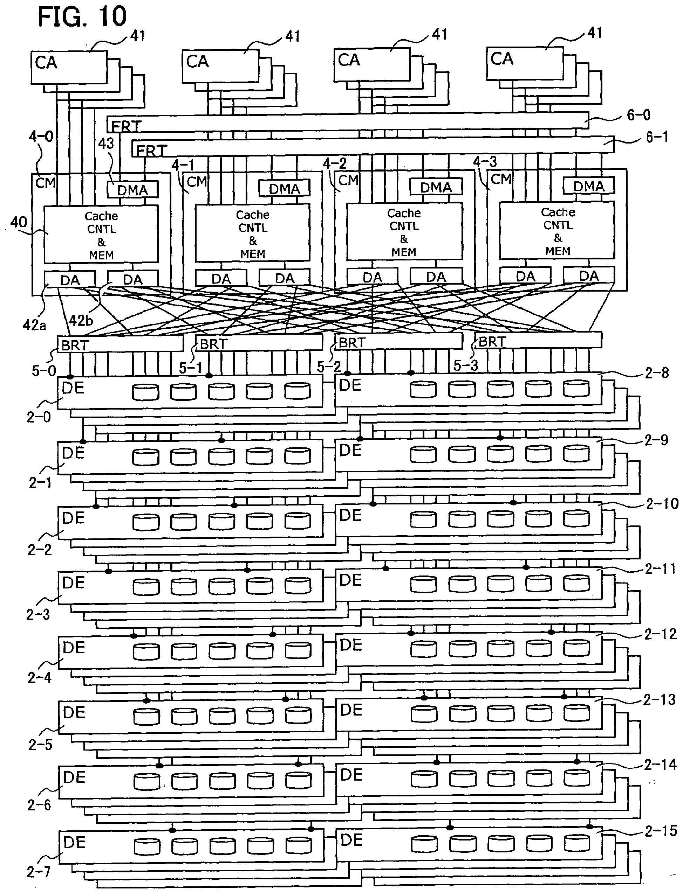

The medium scale storage system in Fig. 10 can also be implemented by a similar configuration. In other words, the configuration of four units of CMs 4-0 - 4-3, four units of BRTs 5-0 - 5-3, two units of FRTs 6-0 - 6-1 and 16 modules of disk enclosures 2-0 - 2-15 can be implemented by the same architecture.

The disk adapters 42a and 42b of each control module 4-0 - 4-7 are connected to all the disk drives 200 by BRTs, so that each control module 4-0 - 4-7 can access all the disk drives via either disk adapter 42a or 42b.

These disk adapters 42a and 42b are mounted respectively on the board of the cache manager 40, which is a major unit of the control modules 4-0 - 4-7, and each disk adapter 42a and 42b can be directly connected with the cache manager 40 by such a low latency bus as PCI-Express, so high throughput can be implemented.

The disk adapters 42a and 42b of each control module 4-0 - 4-7 and BRTs 5-0 - 5-7 are in a one-to-one mesh connection, so even if the number of control modules 4-0 - 4-7 (in other words, the number of disk adapters 42a and 42b) of the system increases, Fibre Channel, which has a small number of signals constituting the interface, can be used for the connection between the disk adapters 42a and 42b and BRTs 5-0 - 5-7, which solves the mounting problem.

In the case of the communication and data transfer processing among each control module 4-0 - 4-7 (in other words, among the cache managers 40 of each control module 4-0 - 4-7), the data transfer volume is high and it is preferable to decrease the time required for connection, and both high throughput and low latency (fast response speed) are demanded, so as Fig. 2 shows, the DMA engine 43 of each control module 4-0 - 4-7 and FRTs 6-0 and 6-1 are connected by PCI-Express, which is a bus using high-speed serial transmission originally designed to satisfy both demands of high through and low latency.

### Other embodiments

In the above embodiments, the signal lines in the control module were stated to use PCI-Express, but other high-speed serial buses, such as Rapid-IO, can also be used. The numbers of channel adapters and disk adapters in the control module can be increased or decreased according to necessity.

For the disk drive, such a storage device as a hard disk drive, optical disk drive and magneto-optical disk drive can be used.

Since the second interface of each control module and the plurality of first switch units are connected, all the control modules can maintain redundancy to access all the storage devices, and even if the number of control modules increases, the control module and the first switch unit can be connected by a serial bus, which has a small number of signals constituting the interface, using the back panel, therefore mounting on the printed circuit board becomes possible while maintaining low latency communication within the control module. So the present invention is effective to unify the architecture from large scale to small scale, and can contribute to decreasing the cost of the device.

## Claims

1. A data storage control system (1) comprising:
a plurality of disk enclosures (2-0 to 2-25) comprising a plurality of disks (200) for storing data according to an access instruction from a host, and
a plurality of control modules (4-0 to 4-7) comprising:
a cache memory (40b) for storing a part of data stored in said disk enclosures (2-0 to 2-25) ;
a cache control unit (40a) for controlling said cache memory (40b) ;
a first interface unit (41a to 41d), connected to said cache control unit (40a) via a bus of a first type, for controlling the interface with said host; and
a second interface unit (42a, 42b), connected to said cache control unit (40a) via the first-type bus, for controlling the interface with said plurality of disk enclosures (2-0 to 2-25),
**characterised in that**:
the plurality of disks (200) in each disk enclosure (2-0 to 2-25) are connected in series,
further **characterised by** comprising:
a plurality of first switch units (5-0 to 5-7) disposed between said plurality of control modules (4-0 to 4-7) and said plurality of disk enclosures (2-0 to 2-25) for selectively switching said second interface unit (42a, 42b) of each control module (4-0 to 4-7) and said plurality of disk enclosures (2-0 to 2-25) ;
a back panel (7) for connecting each said second interface unit (42a, 42b) of said plurality of control modules (4-0 to 4-7) to said plurality of first switch units (5-0 to 5-7) by a serial bus of a second type different from the first type;
a plurality of first module boards, each having the cache memory (40b), the cache controller and the second interface unit of a corresponding control module (4-0 to 4-7) mounted thereon, attached to a front side of said back panel (7);
a plurality of second module boards, each having a first interface unit of a corresponding control module (4-0 to 4-7) mounted thereon, attached to a front side of said backpanel (7); and
a plurality of switch boards, each having a corresponding first switch unit (5-0 to 5-7) mounted thereon, attached to a back side of said back panel (7),
wherein said back panel (7) further comprises a plurality of slots, in which are inserted said plurality of first module boards, said plurality of second module boards, and said plurality of switch boards;
wherein each disk enclosure (2-0 to 2-25) comprises a plurality of unit disk enclosures (20-0 to 23-0), each unit disk enclosure (20-0 to 23-0) having a pair of first ports (210, 212) and a pair of second ports (214, 216), the first ports (210, 212) and second ports (214, 216) of each unit disk enclosure (20-0 to 23-0) being connected to ports of a disk (200) from among the plurality of disks (200); wherein a pair of first ports (210, 212) of a first unit disk enclosure (20-0) from among the plurality of unit disk enclosures (20-0 to 23-0) are further connected to the plurality of first switch units (5-0 to 5-7), and a pair of second ports (214, 216) of the first unit disk enclosure (20-0) are connected to a second unit disk enclosure (21-0) from among the plurality of unit disk enclosures (20-0 to 23-0); and
wherein each of the plurality of unit disk enclosures except the first unit disk enclosure (20-0) has a pair of first ports (210, 212) that are connected to a previous unit disk enclosure from among the plurality of unit disk enclosures, and a pair of second ports (214, 216) for connecting to a subsequent unit disk enclosure.

2. A data storage control system (1) according to claim 1, wherein the first-type bus, connecting said cache control unit (40a) and said second interface unit (42a, 42b), and connecting said cache control unit (40a) and said first interface unit (41a to 41d), is a high-speed serial bus with low latency.

3. A data storage control system (1) according to Claim 1 or 2, wherein the first-type bus, connecting said cache control unit (40a) and said second interface unit (42a, 42b), is constituted by a plurality of lanes of high-speed serial buses.

4. A data storage control system (1) according to claim 2 or 3, wherein said high-speed serial bus is a PCI-Express bus.

5. A data storage control system (1) according to any preceding claim, wherein said serial bus of the second type is Fibre Channel.

6. A data storage control system (1) according to any preceding claim, wherein said first switch units (5-0 to 5-7) and said plurality of disk enclosures (2-0 to 2-25) are connected by cables.

## Patentansprüche

1. Datenspeicher-Steuersystem (1), das umfasst:
eine Mehrzahl von Plattengehäusen (2-0 bis 2-25),
die eine Mehrzahl von Platten (200) zum Speichern von Daten gemäß einer Zugriffsanweisung von einem Host umfasst, und
eine Mehrzahl von Steuermodulen (4-0 bis 4-7), die umfasst:
einen Zwischenspeicher (40b) zum Speichern eines Teils von Daten,
die in den Plattengehäusen (2-0 bis 2-25) gespeichert sind;
eine Zwischenspeicher-Steuereinheit (40a) zum Steuern des Zwischenspeichers (40b);
eine erste Schnittstelleneinheit (41a bis 41d), die mit der Zwischenspeicher-Steuereinheit (40a) über einen Bus eines ersten Typs verbunden ist, zum Steuern der Schnittstelle mit dem Host;
und
eine zweite Schnittstelleneinheit (42a, 42b), die mit der Zwischenspeicher-Steuereinheit (40a) über den Bus des ersten Typs verbunden ist, zum Steuern der Schnittstelle mit der Mehrzahl von Plattengehäusen (2-0 bis 2-25),
**dadurch gekennzeichnet, dass**
die Mehrzahl von Platten (200) in jedem Plattengehäuse (2-0 bis 2-25) in Reihe geschaltet ist, ferner **dadurch gekennzeichnet, dass** es umfasst:
eine Mehrzahl von ersten Schaltereinheiten (5-0 bis 5-7), die zwischen der Mehrzahl von Steuermodulen (4-0 bis 4-7) und der Mehrzahl von Plattengehäusen (2-0 bis 2-25) angeordnet ist, um selektiv die zweite Schnittstelleneinheit (42a, 42b) jedes Steuermoduls (4-0 bis 4-7) und die Mehrzahl von Plattengehäusen (2-0 bis 2-25) zu schalten;
eine Rückwand (7) zum Verbinden jeder zweiten Schnittstelleneinheit (42a, 42b) der Mehrzahl von Steuermodulen (4-0 bis 4-7) mit der Mehrzahl von ersten Schaltereinheiten (5-0 bis 5-7) durch einen seriellen Bus eines zweiten Typs, der sich von dem ersten Typ unterschiedet;
eine Mehrzahl von ersten Modulplatinen, von denen jede den Zwischenspeicher (40b), die Zwischenspeicher-Steuereinrichtung und die zweite Schnittstelleneinheit eines entsprechenden darauf angebrachten Steuermoduls (4-0 bis 4-7) aufweist, das an einer Vorderseite der Rückwand (7) befestigt ist;
eine Mehrzahl von zweiten Modulplatinen, von denen jede eine erste Schnittstelleneinheit eines entsprechenden darauf angebrachten Steuermoduls (4-0 bis 4-7) aufweist, das an einer Vorderseite der Rückwand (7) befestigt ist; und
eine Mehrzahl von Schalttafeln, von denen jede eine darauf angebrachte entsprechende erste Schaltereinheit (5-0 bis 5-7) aufweist, die an einer Rückseite der Rückwand (7) befestigt ist;
wobei die Rückwand (7) ferner eine Mehrzahl von Steckplätzen umfasst, in die die Mehrzahl von ersten Modulplatinen, die Mehrzahl von zweiten Modulplatinen und die Mehrzahl von Schalttafeln eingesteckt sind;
wobei jedes Plattengehäuse (2-0 bis 2-25) eine Mehrzahl von Einheits-Plattengehäusen (20-0 bis 23-0) umfasst, wobei jedes Einheits-Plattengehäuse (20-0 bis 23-0) ein Paar erste Anschlüsse (210, 212) und ein Paar zweite Anschlüsse (214, 216) aufweist, wobei die ersten Anschlüsse (210, 212) und zweiten Anschlüsse (214, 216) jedes Einheits-Plattengehäuses (20-0 bis 23-0) mit Anschlüssen einer Platte (200) aus der Mehrzahl von Platten (200) verbunden sind; wobei ein Paar erste Anschlüsse (210, 212) eines ersten Einheits-Plattengehäuses (20-0) aus der Mehrzahl von Einheits-Plattengehäusen (20-0 bis 23-0) ferner mit der Mehrzahl von ersten Schaltereinheiten (5-0 bis 5-7) verbunden ist, und ein Paar zweite Anschlüsse (214, 216) des ersten Einheits-Plattengehäuses (20-0) mit einem zweiten Einheits-Plattengehäuse (21-0) aus der Mehrzahl von Einheits-Plattengehäusen (20-0 bis 23-0) verbunden ist; und
wobei jedes aus der Mehrzahl von Einheits-Plattengehäusen mit Ausnahme des ersten Einheits-Plattengehäuses (20-0) ein Paar erste Anschlüsse (210, 212}, das mit einem vorhergehenden Einheits-Plattengehäuse aus der Mehrzahl von Einheits-Plattengehäusen verbunden ist, und ein Paar zweite Anschlüsse (214, 216) zum Verbinden mit einem darauf folgenden Einheits-Plattengehäuse aufweist.

2. Datenspeicher-Steuersystem (1) nach Anspruch 1, wobei der Bus des ersten Typs, der die Zwischenspeicher-Steuereinheit (40a) und die zweite Schnittstelleneinheit (42a, 42b) verbindet, und die Zwischenspeicher-Steuereinheit (40a) und die erste Schnittstelleneinheit (41a bis 41d) verbindet, ein serieller Hochgeschwindigkeitsbus mit niedriger Latenz ist.

3. Datenspeicher-Steuersystem (1) nach Anspruch 1 oder 2, wobei der Bus des ersten Typs, der die Zwischenspeicher-Steuereinheit (40a) und die zweite Schnittstelleneinheit (42a, 42b) verbindet, aus einer Mehrzahl von Lanes von seriellen Hochgeschwindigkeitsbussen gebildet ist.

4. Datenspeicher-Steuersystem (1) nach Anspruch 2 oder 3, wobei der serielle Hochgeschwindigkeitsbus ein PCI-Express-Bus ist.

5. Datenspeicher-Steuersystem (1) nach einem der vorhergehenden Ansprüche, wobei der serielle Bus des zweiten Typs Fibre Channel ist.

6. Datenspeicher-Steuersystem (1) nach einem der vorhergehenden Ansprüche, wobei die ersten Schaltereinheiten (5-0 bis 5-7) und die Mehrzahl von Plattengehäusen (2-0 bis 2-25) durch Kabel verbunden sind.

## Revendications

1. Système de commande de stockage de données (1) comportant :
une pluralité d'enveloppes de disques (2-0 à 2-25) comportant une pluralité de disques (200) pour stocker des données selon une instruction d'accès en provenance d'un hôte ; et
une pluralité de modules de commande (4-0 à 4-7) comportant :
u ne mémoire cache (40b) destinée à stocker une partie des données stockées dans lesdites enveloppes de disques (2-0 à 2-25) ; et
u ne unité de commande de mémoire cache (40a) destinée à commander ladite mémoire cache (40b) ; et
u ne première unité d'interface (41a à 41d), connectée à ladite unité de commande de mémoire cache (40a) par l'intermédiaire d'un bus d'un premier type, en vue de commander l'interface avec ledit hôte ; et
u ne seconde unité d'interface (42a, 42b), connectée à ladite unité de commande de mémoire cache (40a) par l'intermédiaire du bus du premier type, en vue de commander l'interface avec ladite pluralité d'enveloppes de disques (2-0 à 2-25) ;
**caractérisé en ce que** :
la pluralité de disques (200) dans chaque enveloppe de disques (2-0 à 2-25) est connectée en série ;
en outre **caractérisé en ce qu'**il comporte :
une pluralité de premières unités de commutation (5-0 à 5-7) disposée entre ladite pluralité de modules de commande (4-0 à 4-7) et ladite pluralité d'enveloppes de disques (2-0 à 2-25) en vue de commuter sélectivement ladite seconde unité d'interface (42a, 42b) de chaque module de commande (4-0 à 4-7) et ladite pluralité d'enveloppes de disques (2-0 à 2-25) ;
un panneau arrière (7) pour connecter chaque dite seconde unité d'interface (42a, 42b) de ladite pluralité de modules de commande (4-0 à 4-7) à ladite pluralité de premières unités de commutation (5-0 à 5-7), par un bus série d'un second type différent du premier type ; et
une pluralité de premières cartes de modules, sur chacune desquelles sont montés la mémoire cache (40b), le contrôleur de mémoire cache et la seconde unité d'interface d'un module de commande correspondant (4-0 à 4-7), fixées sur une face avant dudit panneau arrière (7) ; et
une pluralité de secondes cartes de modules, sur chacune desquelles est montée une première unité d'interface d'un module de commande correspondant (4-0 à 4-7), fixées sur une face avant dudit panneau arrière (7) ; et
une pluralité de cartes de commutation, sur chacun desquelles est montée une première unité de commutation correspondante (5-0 à 5-7), fixées à une face arrière dudit panneau arrière (7) ;
dans lequel ledit panneau arrière (7) comporte en outre une pluralité de fentes, dans lesquelles sont insérées ladite pluralité de premières cartes de modules, ladite pluralité de secondes cartes de modules, et ladite pluralité de cartes de commutation ; et
dans lequel chaque enveloppe de disques (2-0 à 2-25) comporte une pluralité d'enveloppes de disques unitaires (20-0 à 23-0), chaque enveloppe de disques unitaire (20-0 à 23-0) présentant une paire de premiers ports (210, 212) et une paire de seconds ports (214, 216), les premiers ports (210, 212) et les seconds ports (214, 216) de chaque enveloppe de disques unitaire (20-0 à 23-0) étant connectés aux ports d'un disque (200) parmi la pluralité de disques (200) ; dans lequel une paire de premiers ports (210, 212) d'une première enveloppe de disques unitaire (20-0) parmi la pluralité d'enveloppes de disques unitaires (20-0 à 23-0) est en outre connectée à la pluralité de premières unités de commutation (5-0 à 5-7), et une paire de seconds ports (214, 216) de la première enveloppe de disques unitaire (20-0) est connectée à une seconde enveloppe de disques unitaire (21-0) parmi la pluralité d'enveloppes de disques unitaires (20-0 à 23-0) ; et
dans lequel chaque enveloppe de la pluralité d'enveloppes de disques unitaires, à l'exception de la première enveloppe de disques unitaire (20-0), présente une paire de premiers ports (210, 212) qui est connectée à une enveloppe de disques unitaire précédente parmi la pluralité d'enveloppes de disques unitaires, et une paire de seconds ports (214, 216) à connecter à une enveloppe de disques unitaires subséquente.

2. Système de commande de stockage de données (1) selon la revendication 1, dans lequel le bus du premier type, connectant ladite unité de commande de mémoire cache (40a) et ladite seconde unité d'interface (42a, 42b), et connectant ladite unité de commande de mémoire cache (40a) et ladite première unité d'interface (41a à 41d), correspond à un bus série haut débit doté d'une faible latence.

3. Système de commande de stockage de données (1) selon la revendication 1 ou 2, dans lequel le bus du premier type, connectant ladite unité de commande de mémoire cache (40a) et ladite seconde unité d'interface (42a, 42b), est constitué d'une pluralité de couloirs de bus série haut débit.

4. Système de commande de stockage de données (1) selon la revendication 2 ou 3, dans lequel ledit bus série haut débit est un bus PCI-Express.

5. Système de commande de stockage de données (1) selon l'une quelconque des revendications précédentes, dans lequel ledit bus série du second type correspond à une technologie d'interconnexion « Fibre Channel », ou canal à fibres optiques.

6. Système de commande de stockage de données (1) selon l'une quelconque des revendications précédentes, dans lequel lesdites premières unités de commutation (5-0 à 5-7) et ladite pluralité d'enveloppes de disques (2-0 à 2-25) sont connectées par des câbles.
